# EUROPEAN PATENT APPLICATION

(11) **EP 3 703 430 A1**
(43) Date of publication of application: **02.09.2020**
(21) Application number: 18892045.8
(22) Date of filing: 29.09.2018
(51) Int. Cl.: H04W 52/02, H04W 84/18

(54) **WIRELESS SENSOR MANAGEMENT METHOD, APPARATUS, AND SYSTEM**

(30) Priority: 21.12.2017 CN 201711415008
(71) Applicant: HUAWEI TECHNOLOGIES CO., LTD., Shenzhen, Guangdong 518129 (CN)
(72) Inventor: JIN, Yong, Shenzhen, Guangdong 518129 (CN); LIU, Weirong, Shenzhen, Guangdong 518129 (CN); LI, Xiaobing, Shenzhen, Guangdong 518129 (CN)
(74) Representative: MERH-IP Matias Erny Reichl Hoffmann Patentanwälte PartG mbB
(86) International application number: PCT/CN2018/108585
(87) International publication number: WO 2019/119922

(57) **Abstract**

This application discloses a wireless sensor management method, an apparatus, and a communications system. The communications system includes a site management unit, a management node, and a wireless sensor. The wireless sensor sends a connection request to the management node in a wakeup mode. The management node queries whether the management node locally caches a first message in advance, where the first message is a message that is received by the management node from the site management unit when the wireless sensor is in a sleep mode; and the management node sends a response to the wireless sensor based on a result of the query, where when the result of the query is that the management node locally caches the first message in advance, the response carries the first message, and when the result of the query is that the management node does not locally cache the first message in advance, the response indicates that the management node does not cache the first message. The wireless sensor quickly switches from the wakeup mode to the sleep mode after receiving the response. According to embodiments of the present invention, a service life of a battery of the wireless sensor can be prolonged, so that the wireless sensor is extensively applied to an access side site.

## Description

### TECHNICAL FIELD

This application relates to the field of communications technologies, and in particular, to a wireless sensor management method, a related device, and a system.

### BACKGROUND

Currently, in a scenario of an access side site in the communications field, a sensor distributed onsite is usually widely used to collect environmental data, for example, collect environment temperature and humidity, detect air quality, detect fire, detect an oil capacity, perform anti-theft detection, and control a light. Then the environmental data is sent to a site management unit (SMU) according to a pre-stipulated protocol, and a control instruction of the site management unit is delivered to each sensor through a gateway node. Because the access side site is usually unattended, in order to enable the sensor to work normally for a long time, the site management unit is usually connected to the sensor through a communications cable, and a power supply cable is used to supply power to both the site management unit and the sensor. Therefore, during deployment of the access side site, trenching, pipe-burying, and cable layout are usually required, and consequently construction costs are high and operation is difficult, thereby restricting application of the sensor at the access side site.

To avoid the cable layout, a wireless sensor may be used, and a battery of the wireless sensor is usually used to supply power to the wireless sensor. In consideration of a limited capacity of the battery, energy consumption of the wireless sensor is usually reduced by using a low-power communication mechanism. However, usually, a service life of the battery of the wireless sensor can maintain only 1 to 2 years or even less in actual application. When the battery is exhausted, a person needs to be arranged to regularly replace the battery at the site. This is against with an original intention of a long-term unattended state for the access side site, and a requirement that the sensor at the access side site normally works for at least 5 years cannot be met. Consequently, the wireless sensor cannot be extensively applied to the access side site.

### SUMMARY

This application provides a wireless sensor management method, an apparatus, and a system, to reduce power consumption of a wireless sensor, prolong a service life of a battery of the wireless sensor, meet a requirement that a battery replacement cycle of the wireless sensor is more than 5 years in an application scenario of an access side site in the communications field, and resolve a problem that the wireless sensor cannot be extensively applied to the access side site, thereby greatly improving deployment efficiency of the access side site and reducing deployment costs.

According to a first aspect, an embodiment of the present invention provides a communications system, and the communications system is applied to an access side site. The access side site is a wireless access network site (for example, a base station) or a wired access network site. The communications system includes a site management unit, a management node, and a wireless sensor. The site management unit and the management node may be separately deployed, or may be deployed together. The wireless sensor is in a "sleep-wakeup" working mode. The wireless sensor is configured to send a connection request to the management node when the wireless sensor ends a sleep mode and enters a wakeup mode. The management node is configured to query, based on the connection request, whether the management node locally caches a first message in advance, where the first message is a message that is received by the management node from the site management unit when the wireless sensor is in the sleep mode, and is used for communication between the site management unit and the wireless sensor. The management node is further configured to send a response to the wireless sensor based on a result of the query. When the result of the query is that the management node locally caches the first message in advance, the response is used to carry the first message, and when the result of the query is that the management node does not locally cache the first message in advance, the response is used to indicate that the management node does not cache the first message. The wireless sensor is further configured to switch from the wakeup mode to the sleep mode after receiving the response.

It can be learned that in this embodiment of the present invention, the management node serves as a message agent between the wireless sensor and the site management unit. When the management node caches the first message of the site management unit in advance, if the wireless sensor node needs to exchange information with the site management unit after being awakened, the wireless sensor node only needs to quickly exchange information with the management node instead of directly exchanging information with the site management unit; and if information does not need to be exchanged between the site management unit and the wireless sensor, the wireless sensor can quickly enter the sleep mode in such time periods. This greatly shortens a communication link and reduces communication costs, thereby shortening duration of the wakeup mode of the wireless sensor, reducing power consumption of the wireless sensor, and greatly prolonging a battery replacement cycle of the wireless sensor node.

Based on the first aspect, in a possible implementation, after receiving the response, the wireless sensor is further configured to send a second message to the management node, where the second message is a message used for communication between the wireless sensor and the site management unit; and that the wireless sensor is further configured to switch from the wakeup mode to the sleep mode based on the response includes: the wireless sensor is further configured to switch from the wakeup mode to the sleep mode after sending the second message to the management node.

In other words, the management node returns a first response to the wireless sensor, where the first response carries the first message. The first message is, for example, a service query instruction. The wireless sensor completes corresponding service query processing for the first message, and then determines whether the second message needs to be uploaded locally. The second message is, for example, a service processing result or an environmental parameter collected by the wireless sensor. If the second message needs to be uploaded, the wireless sensor sends the second message to the management node, and then enters the sleep mode. If the second message does not need to be uploaded, the wireless sensor quickly switches from the wakeup mode to the sleep mode.

Based on the first aspect, in a possible implementation, the site management unit is further configured to determine new duration of the wakeup mode and new duration of the sleep mode of the wireless sensor based on a service requirement of the site management unit. The first message includes the duration of the wakeup mode and the duration of the sleep mode, and the duration is finally sent to the wireless sensor by using the first message. The wireless sensor is configured based on the new duration of the wakeup mode and the new duration of the sleep mode. That the wireless sensor is further configured to switch from the wakeup mode to the sleep mode based on the response includes: the wireless sensor is further configured to: when meeting the new duration of the wakeup mode, switch from the wakeup mode to the sleep mode having the new duration of the sleep mode.

Based on the first aspect, in another possible implementation, the wireless sensor is further configured to: determine new duration of the wakeup mode and new duration of the sleep mode of the wireless sensor based on a service volume of the wireless sensor. Then, the wireless sensor is configured based on the new duration of the wakeup mode and the new duration of the sleep mode. That the wireless sensor is further configured to switch from the wakeup mode to the sleep mode based on the response includes: the wireless sensor is configured to: when meeting the new duration of the wakeup mode, switch from the wakeup mode to the sleep mode having the new duration of the sleep mode.

In other words, in this embodiment of the present invention, the duration of the sleep mode and the duration of the wakeup mode of the wireless sensor may be dynamically adjusted, and the site management unit or the wireless sensor may generate the new duration of the sleep mode and the new duration of the wakeup mode based on the service requirement of the site management unit or a service requirement of the wireless sensor. In specific implementation, data sampling frequency of the access side site may be adjusted based on an actual service status. When a service volume is relatively small, a working cycle may be prolonged (for example, sampling is performed once per minute). In a process of prolonging the working cycle, the duration of the sleep mode of the wireless sensor is prolonged, the duration of the wakeup mode of the wireless sensor is shortened, and the access side site (the wireless sensor) is in a slow sampling cycle in this case. When a service volume is relatively large or a service greatly changes, the working cycle may be shortened (for example, sampling is performed 10 times per minute). In a process of shortening the working cycle, the duration of the sleep mode of the wireless sensor is shortened, the duration of the wakeup mode of the wireless sensor is prolonged, and the access side site is in a fast sampling cycle in this case. In this way, the wireless sensor can quickly respond to an external environment change, thereby ensuring optimal performance of the wireless sensor when power consumption is reduced and a service life of a battery of the wireless sensor is prolonged.

According to a second aspect, an embodiment of the present invention provides a wireless sensor management method, and the method is applied to an access side site. The access side site includes a site management unit, a management node, and a wireless sensor. The method is described from a perspective of the management node, and includes: receiving, by the management node, a connection request that is sent by the wireless sensor when the wireless sensor is in a wakeup mode; querying, by the management node based on the connection request, whether the management node locally caches a first message in advance, where the first message is a message that is received by the management node from the site management unit when the wireless sensor is in a sleep mode, and is used for communication between the site management unit and the wireless sensor; and sending, by the management node, a response to the wireless sensor based on a result of the query, so that the wireless sensor switches from the wakeup mode to the sleep mode after receiving the response. When the result of the query is that the management node locally caches the first message in advance, the response carries the first message, and when the result of the query is that the management node does not locally cache the first message in advance, the response is further used to indicate that the management node does not cache the first message.

Based on the second aspect, in a possible implementation, after the sending, by the management node, a response to the wireless sensor based on a result of the query, the method includes: receiving a second message sent by the wireless sensor, where the second message is a message used for communication between the wireless sensor and the site management unit.

Based on the second aspect, in a possible implementation, the first message includes duration of the wakeup mode and duration of the sleep mode. That the response is used to instruct the wireless sensor to switch from the wakeup mode to the sleep mode includes: the response is used to instruct the wireless sensor to switch, when the wireless sensor meets the duration of the wakeup mode, from the wakeup mode to the sleep mode having the duration of the sleep mode. In other words, the wireless sensor is in a "sleep-wakeup" working mode, and the duration of the wakeup mode and the duration of the sleep mode may be dynamically set based on a service requirement of the site management unit.

According to a third aspect, an embodiment of the present invention provides another wireless sensor management method, and the method is applied to an access side site. The access side site includes a site management unit, a management node, and a wireless sensor. The method is described from a perspective of the wireless sensor, and includes: sending, by the wireless sensor, a connection request to the management node in a wakeup mode; receiving, by the wireless sensor, a response sent by the management node, where the response is used to carry a first message that is cached in the management node in advance, or the response is used to indicate that the management node does not cache the first message, and the first message is a message that is received by the management node from the site management unit when the wireless sensor is in a sleep mode; and switching, by the wireless sensor, from the wakeup mode to the sleep mode after receiving the response.

Based on the third aspect, in a possible implementation, after receiving the response sent by the management node, the wireless sensor sends a second message to the management node, where the second message is a message used for communication between the wireless sensor and the site management unit; and the switching, by the wireless sensor, from the wakeup mode to the sleep mode based on the response includes: switching, by the wireless sensor, from the wakeup mode to the sleep mode after sending the second message to the management node.

Based on the third aspect, in a possible implementation, the wireless sensor determines duration of the wakeup mode and duration of the sleep mode of the wireless sensor based on a service volume of the wireless sensor; and the switching, by the wireless sensor, from the wakeup mode to the sleep mode based on the response includes: when meeting the duration of the wakeup mode, switching, by the wireless sensor, from the wakeup mode to the sleep mode having the duration of the sleep mode. In other words, the wireless sensor is in a "sleep-wakeup" working mode, and the duration of the wakeup mode and the duration of the sleep mode may be dynamically set based on a service requirement of the wireless sensor.

According to a fourth aspect, an embodiment of the present invention provides a management node, including: a receiving module, a querying module, and a sending module. The receiving module is configured to receive a connection request that is sent by a wireless sensor when the wireless sensor is in a wakeup mode. The querying module is configured to query, based on the connection request, whether the management node locally caches a first message in advance, where the first message is a message that is received by the receiving module from the site management unit when the wireless sensor is in a sleep mode. The sending module is configured to send a response to the wireless sensor based on a result of the query, where the response is used to enable the wireless sensor to switch from the wakeup mode to the sleep mode, and when the result of the query is that the management node locally caches the first message in advance, the response carries the first message. Each module in this embodiment of the present invention may be configured to implement the method in the second aspect.

According to a fifth aspect, an embodiment of the present invention provides another management node, including: a processor, a receiver, a transmitter, and a memory. These components may communicate with each other on one or more communications buses. The processor may invoke program code, a communication instruction, and data in the memory, to implement the method in the second aspect.

According to a sixth aspect, an embodiment of the present invention provides a wireless sensor, including: a sending module, a receiving module, a status module, and an optional cycle module. The sending module is configured to send a connection request to the management node in a wakeup mode. The receiving module is configured to receive a response sent by the management node, where the response is used to carry a first message that is cached in the management node in advance, or the response is used to indicate that the management node does not cache the first message, and the first message is a message that is received by the management node from the site management unit when the wireless sensor is in a sleep mode. The status module switches from the wakeup mode to the sleep mode after receiving the response. Each module in this embodiment of the present invention may be configured to implement the method in the third aspect.

According to a seventh aspect, an embodiment of the present invention provides another wireless sensor, including: a processor, a wireless communications module (including a receiver and a transmitter), a memory, a collection module, and a clock module. These components may communicate with each other on one or more communications buses. The processor may invoke program code, a communication instruction, and data in the memory, to implement the method in the third aspect.

According to an eighth aspect, an embodiment of the present invention provides a computer readable storage medium, configured to store code that is used to implement the method in the second aspect.

According to a ninth aspect, an embodiment of the present invention provides a computer readable storage medium, configured to store code that is used to implement the method in the third aspect.

According to a tenth aspect, an embodiment of the present invention provides a computer software product, and when the computer software product runs on a computer, the computer is enabled to implement the method in the second aspect.

According to an eleventh aspect, an embodiment of the present invention provides a computer software product, and when the computer software product runs on a computer, the computer is enabled to implement the method in the third aspect.

It can be learned that in the embodiments of the present invention, a mechanism in which a communication connection is established from bottom to top is used. In most wakeup modes of lifecycles, the wireless sensor does not need to exchange information with the site management unit, and the wireless sensor can quickly enter the sleep mode in such time periods. When the wireless sensor node needs to exchange information with the site management unit, the wireless sensor node only needs to quickly exchange information with the management node instead of directly exchanging information with the site management unit, to greatly shorten a communication link and reduce communication costs, thereby shortening duration of the wakeup mode of the wireless sensor, reducing power consumption of the wireless sensor, and greatly prolonging a battery replacement cycle of the wireless sensor. In addition, in the embodiments of the present invention, the site management unit or the wireless sensor may dynamically adjust the duration of the sleep mode and the duration of the wakeup mode of the wireless sensor based on the service requirement of the site management unit or the service requirement of the wireless sensor, to ensure that the wireless sensor can quickly respond to an external environment change, thereby ensuring optimal performance of the wireless sensor when power consumption is reduced and a service life of a battery of the wireless sensor is prolonged. Practice shows that according to the embodiments of the present invention, the service life of the battery of the wireless sensor node can be prolonged by more than 5 to 10 years, so that the wireless sensor can be extensively applied to the access side site. Using the wireless sensor at the site can improve deployment efficiency of the access side site and reduce deployment costs.

### BRIEF DESCRIPTION OF DRAWINGS

FIG. 1 is a communications system according to an embodiment of the present invention;
FIG. 2 is another communications system according to an embodiment of the present invention;
FIG. 3 is a scenario diagram of an example of a communications system according to an embodiment of the present invention;
FIG. 4 is a schematic flowchart of a wireless sensor management method according to an embodiment of the present invention;
FIG. 5 is a schematic flowchart of another wireless sensor management method according to an embodiment of the present invention;
FIG. 6 is a schematic flowchart of another wireless sensor management method according to an embodiment of the present invention;
FIG. 7 is a schematic flowchart of another wireless sensor management method according to an embodiment of the present invention;
FIG. 8 is a schematic flowchart of another wireless sensor management method according to an embodiment of the present invention;
FIG. 9 is a schematic flowchart of another wireless sensor management method according to an embodiment of the present invention;
FIG. 10 is a schematic flowchart of another wireless sensor management method according to an embodiment of the present invention;
FIG. 11 is a scenario diagram of an example of dynamically adjusting a cycle according to an embodiment of the present invention;
FIG. 12 is a schematic diagram of a communications system and function modules of a related apparatus according to an embodiment of the present invention;
FIG. 13 is a schematic structural diagram of a management node according to an embodiment of the present invention; and
FIG. 14 is a schematic structural diagram of a wireless sensor according to an embodiment of the present invention.

### DESCRIPTION OF EMBODIMENTS

The following first describes a communications system provided in the embodiments of the present invention. The communications system provided in the embodiments of the present invention is applied to an access side site. The access side site is a wireless access network site (for example, a base station) or a wired access network site. The communications system includes a site management unit, a management node, and a wireless sensor node (which may be referred to as a wireless sensor below). The site management unit and the management node may be separately deployed, or may be deployed together.

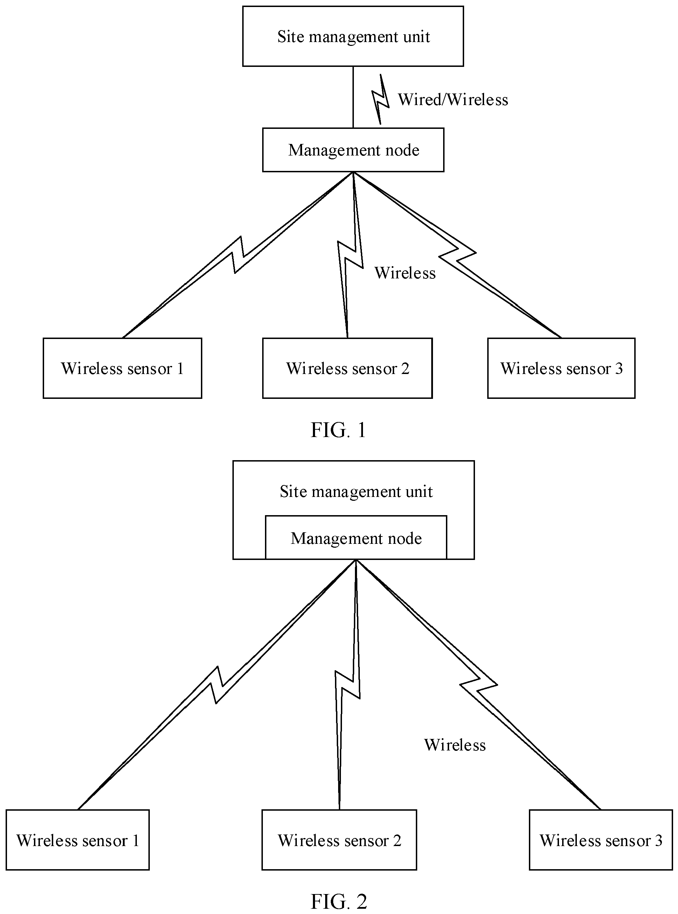

FIG. 1 is a communications system according to an embodiment of the present invention. As a gateway for data routing and an agent for data cache, a management node in the communications system may be remotely deployed outside a site management unit through a wired or wireless connection. The management node and wireless sensors (such as a wireless sensor 1, a wireless sensor 2, and a wireless sensor 3 shown in the figure) hosted by the management node are wirelessly connected. During specific deployment, a deployment location of the management node may be determined based on an actual installation location of the wireless sensor node hosted by the management node. The wireless sensor may transmit collected environmental data to a gateway node in a single-hop or multi-hop manner, and the gateway node then transmits the environmental data to the site management unit. A control instruction of the site management unit is also delivered to each sensor through the gateway node.

FIG. 2 is another communications system according to an embodiment of the present invention. A management node in the communications system is deployed inside a site management unit. In other words, the site management unit and a wireless sensor are physically or functionally deployed together. The site management unit and wireless sensors (such as a wireless sensor 1, a wireless sensor 2, and a wireless sensor 3 shown in the figure) are wirelessly connected. During specific deployment, a deployment location of the site management unit may be determined based on an actual installation location of the wireless sensor node hosted by the management node. The wireless sensor may transmit collected environmental data to a gateway node in the site management unit in a single-hop or multi-hop manner, and the gateway node then transmits the environmental data to a related data processing module of the site management unit for processing. A control instruction of the site management unit is also delivered to each sensor through the gateway node.

It should be noted that, to facilitate understanding of the technical solutions in the embodiments of the present invention, the technical solutions in the embodiments of the present invention are mainly described in detail below based on the system shown in the embodiment in FIG. 1. Implementation of the system shown in the embodiment in FIG. 2 is similar, and details are not described below again.

The embodiments of the present invention are mainly applied to an access side site, including a site management unit, a management node, and a wireless sensor. In specific implementation, the site management unit may be a site-level monitoring center, a site server, or the like, and is configured to complete data collection and summarization, data analysis and processing, linkage control, intelligent scheduling, and the like of a site device and a site environmental parameter. As a gateway node for data routing and an agent for data cache, the management node is configured to: construct a wireless network, manage a wireless sensor to which the management node belongs, act as an agent for information exchange between the site management unit and the wireless sensor, and cache and transmit data. The wireless sensor is configured to collect data such as an environmental parameter, and is in a "wakeup-sleep" working mode. To be specific, a working cycle of the wireless sensor may be divided into a sleep mode and a wakeup mode, and the wireless sensor does not work in the sleep mode, but works only in the wakeup mode. The wireless sensor accesses the wireless network, and transmits the data.

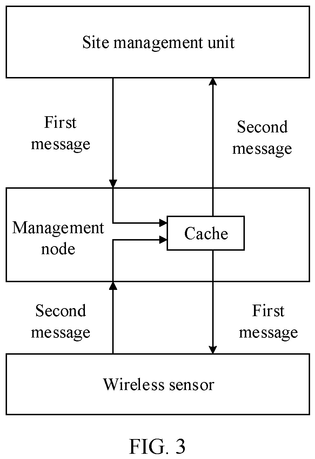

Referring to FIG. 3, in a specific embodiment, when the site management unit needs to deliver a first message to the wireless sensor, the site management unit may deliver and cache the first message into the management node when the wireless sensor is in the sleep mode. The first message is a message that is received by the management node from the site management unit when the wireless sensor is in the sleep mode, and the first message is used for communication between the site management unit and the wireless sensor, such as a control instruction of the site management unit. After switching from a sleep mode of a current working cycle to a wakeup mode of the current working cycle, the wireless sensor is connected to the management node, and uploads and caches a second message in the wireless sensor into the management node (if there is the second message). The second message is a message used for communication between the wireless sensor and the site management unit, such as an environmental parameter collected by the wireless sensor. In this case, if the management node caches the first message, the first message is delivered to the wireless sensor, and the wireless sensor completes work in the wakeup mode, enters a sleep mode of a next working cycle, and waits for a wakeup mode of the next working cycle. If the management node does not cache the first message, the wireless sensor may immediately enter a sleep mode of a next working cycle, and wait for a wakeup mode of the next working cycle. The management node may upload the cached second message to the site management unit within a time specified in a protocol, thereby implementing communication between the site management unit and the wireless sensor.

It can be learned that in this embodiment of the present invention, a mechanism in which a communication connection is established from bottom to top is used. In most wakeup modes of lifecycles, the wireless sensor does not need to exchange information with the site management unit, and the wireless sensor can quickly enter the sleep mode in such time periods. When the wireless sensor node needs to exchange information with the site management unit, the wireless sensor node only needs to quickly exchange information with the management node instead of directly exchanging information with the site management unit, to greatly shorten a communication link and reduce communication costs, thereby shortening duration of the wakeup mode of the wireless sensor, reducing power consumption of the wireless sensor, and greatly prolonging a battery replacement cycle of the wireless sensor node.

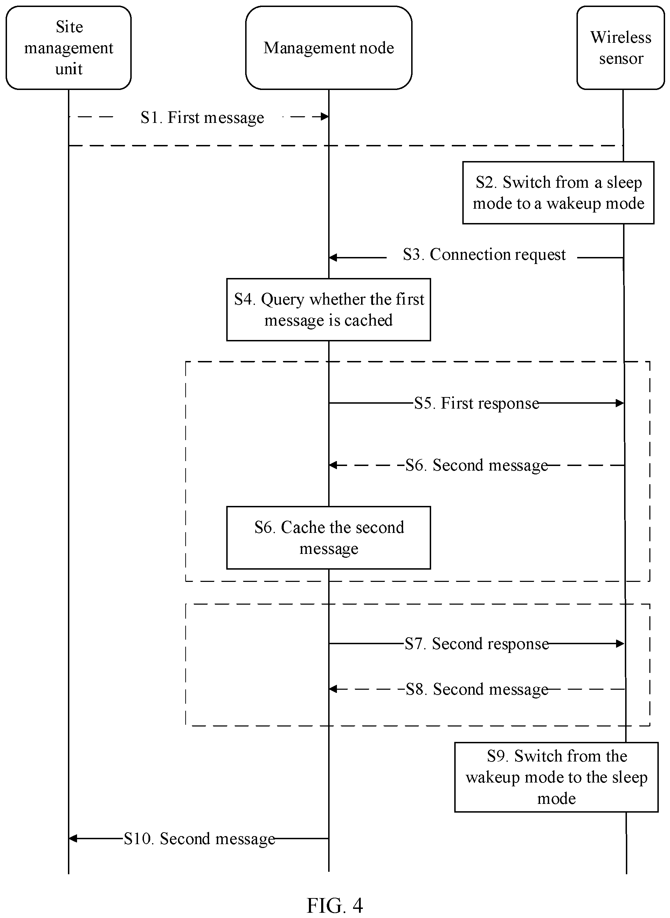

Referring to FIG. 4, based on the system described above, the following describes in detail a wireless sensor management method according to an embodiment of the present invention from a plurality of perspectives. The method includes but is not limited to the following steps.

S1. Optionally, before implementation of this method embodiment, a site management unit may send and cache a first message into a management node as required when a wireless sensor is in a sleep mode. The first message is a message that is received by the management node from the site management unit when the wireless sensor is in the sleep mode, and is used for communication between the site management unit and the wireless sensor, such as a control instruction of the site management unit. In other words, in this embodiment of the present invention, the first message is sent by the site management unit to the wireless sensor. When the first message is forwarded by the management node, when finding that the wireless sensor is in the sleep mode, the management node first caches all messages that are sent by all devices such as the site management unit except the management node to the wireless sensor, and after the wireless sensor is awakened, the management node sends, to the wireless sensor, the messages that are cached in a sleep period of the wireless sensor.

S2. The wireless sensor switches from the sleep mode to a wakeup mode. The wireless sensor is in a "sleep-wakeup" working mode, and duration of the wakeup mode and duration of the sleep mode may be dynamically set based on a service requirement of the wireless sensor or a service requirement of the site management unit.

S3. After being awakened, the wireless sensor actively sends a connection request to the management node to establish a communication connection between the wireless sensor and the management node by using a bottom-to-top communication connection mechanism.

S4. The management node queries whether the management node locally caches a service request (in other words, whether the management node caches the first message). If a result of the query is that the management node caches the first message, step S5 is performed. If the result of the query is that the management node does not cache the first message, step S7 is performed.

S5. The management node returns a first response to the wireless sensor, where the first response carries the first message. The wireless sensor completes corresponding service processing for the first message, and then determines whether a second message needs to be uploaded locally. The second message is a message used for communication between the wireless sensor and the site management unit, such as a service processing result or an environmental parameter collected by the wireless sensor. If the second message needs to be uploaded, step S6 is performed. If the second message does not need to be uploaded, step S9 is performed.

S6. The wireless sensor sends the second message to the management node, and performs step S9 after sending the second message. Correspondingly, the management node receives the second message and stores the second message in a local cache, and subsequently performs step S10 based on a time specified in a protocol.

S7. The management node returns a second response to the wireless sensor, where the second response is used to indicate that there is no service request in the management node (in other words, the first message is not cached). After receiving the second response, the wireless sensor determines whether a second message needs to be uploaded locally. The second message is a message used for communication between the wireless sensor and the site management unit, such as an environmental parameter collected by the wireless sensor. If the second message needs to be uploaded, step S8 is performed. If the second message does not need to be uploaded, step S9 is performed.

S8. The wireless sensor sends the second message to the management node, and performs step S9 after sending the second message. Correspondingly, the management node receives the second message and stores the second message in a local cache, and subsequently performs step S10 based on a time specified in a protocol.

S9. The wireless sensor switches from the wakeup mode to the sleep mode. The duration of the wakeup mode and the duration of the sleep mode may be dynamically set based on the service requirement of the wireless sensor or the service requirement of the site management unit. In other words, the site management unit may determine the duration of the wakeup mode and the duration of the sleep mode of the wireless sensor based on the service requirement of the site management unit, add, to the first message, indication information indicating the duration of the wakeup mode and the duration of the sleep mode, and finally deliver the first message to the wireless sensor through the management node; or the wireless sensor may determine the duration of the wakeup mode and the duration of the sleep mode of the wireless sensor based on a service volume of the wireless sensor, for example, may determine the duration of the wakeup mode and the duration of the sleep mode based on a message volume or a change degree of a collected environmental parameter. If the duration of the wakeup mode and the duration of the sleep mode are preset, but the wireless sensor is still in the preset wakeup mode after completing the foregoing related service procedure, in a possible embodiment, the wireless sensor immediately terminates the wakeup mode, changes the duration of the wakeup mode and the duration of the sleep mode, and enters the sleep mode; or in another possible embodiment, the wireless sensor terminates the wakeup mode after the duration of the wakeup mode ends, and enters the sleep mode.

S10. The management node uploads the second message to the site management unit based on the time specified in the protocol, to complete communication between the wireless sensor and the site management unit. For example, in a possible embodiment, the management node immediately forwards the second message to the site management unit. In another possible embodiment, the management node first caches the second message, and then sends the second message to the site management unit at the specific time.

It should be noted that in a possible implementation of this embodiment of the present invention, when the wireless sensor needs to upload the second message, the wireless sensor may alternatively send the second message to the management node in step S3, to be specific, send the second message when sending the connection request to the management node.

It should be further noted that in a possible embodiment, when a message volume of the first message cached in the management node is relatively large, the management node may deliver the first message to the wireless sensor at a plurality of times. Similarly, when a message volume of the second message in the wireless sensor is relatively large, the wireless sensor may upload the second message to the management node at a plurality times.

It can be learned that in this embodiment of the present invention, the management node serves as a message agent between the wireless sensor and the site management unit. If the wireless sensor does not need to exchange information with the site management unit in a wakeup mode of a lifecycle, the wireless sensor can quickly enter a sleep mode in such time periods. When the wireless sensor node needs to exchange information with the site management unit, the wireless sensor node only needs to quickly exchange information with the management node instead of directly exchanging information with the site management unit, to greatly shorten a communication link and reduce communication costs, thereby shortening duration of the wakeup mode of the wireless sensor, reducing power consumption of the wireless sensor, and greatly prolonging a battery replacement cycle of the wireless sensor node.

The following describes in detail specific implementations of the method provided in this embodiment of the present invention by using an example.

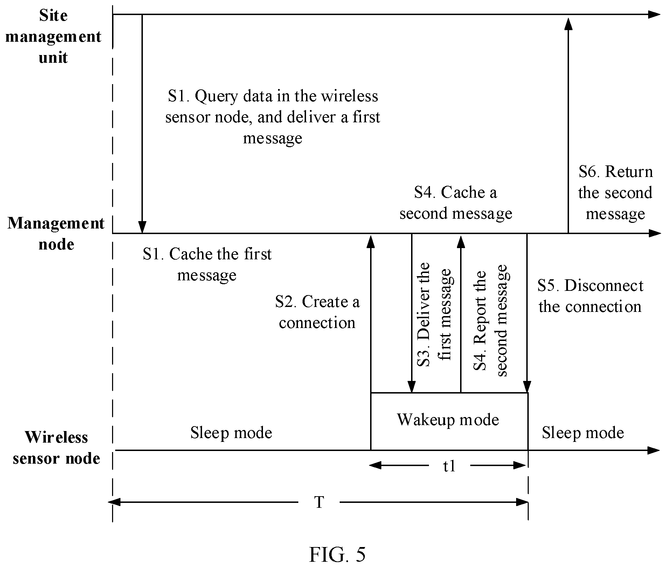

In an application scenario shown in FIG. 5, a wireless sensor management method provided in an embodiment of the present invention includes but is not limited to the following steps.

S1. A working cycle T of a wireless sensor includes duration t1 of a wakeup mode and duration (T-t1) of a sleep mode. Within the duration (T-t1) of the sleep mode, a site management unit needs to query data in the wireless sensor, and therefore sends a query instruction (namely, a first message) to a management node, and the management node caches the first message.

S2. After detecting that the sleep mode ends, a timer in the wireless sensor wakes the wireless sensor up and the wireless sensor enters the wakeup mode. The wireless sensor sends a connection request to the management node in the wakeup mode, to create a wireless connection between the wireless sensor and the management node.

S3. The management node delivers the first message to the wireless sensor. Correspondingly, the wireless sensor receives the first message, and completes corresponding service data query processing for the first message.

S4. The wireless sensor uploads a second message to the management node, where the second message includes a service data query result and an environmental parameter newly collected by the wireless sensor. Correspondingly, the management node caches the second message.

S5. The wireless sensor disconnects the communication connection to the management node, and enters a next sleep mode after the duration t1 of the wakeup mode ends.

S6. After the communication connection is disconnected, the management node uploads the second message to the site management unit.

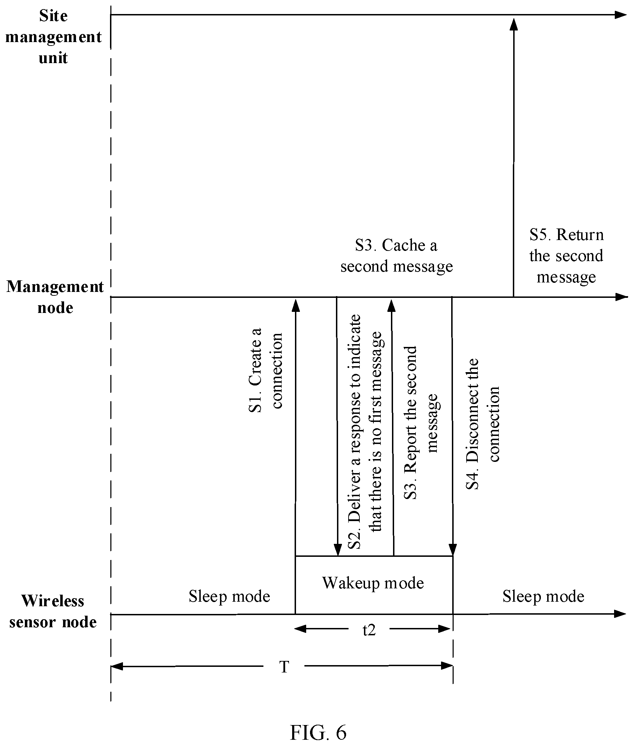

In an application scenario shown in FIG. 6, a wireless sensor management method provided in an embodiment of the present invention includes but is not limited to the following steps.

S1. A working cycle T of a wireless sensor includes duration t2 of a wakeup mode and duration (T-t2) of a sleep mode. A site management unit does not deliver a first message to a management node when the wireless sensor is in the sleep mode. After detecting that the sleep mode ends, a timer in the wireless sensor wakes the wireless sensor up and the wireless sensor enters the wakeup mode. The wireless sensor sends a connection request to the management node in the wakeup mode, to create a wireless connection between the wireless sensor and the management node.

S2. The management node delivers a response to the wireless sensor, where the response is used to indicate that "the management node does not cache the first message" to the wireless sensor.

S3. The wireless sensor reports a second message to the management node, where the second message includes a newly-collected environmental parameter.

S4. The wireless sensor disconnects the communication connection to the management node, and enters a next sleep mode after the duration t2 of the wakeup mode ends.

S5. After the communication connection is disconnected, the management node uploads the second message to the site management unit.

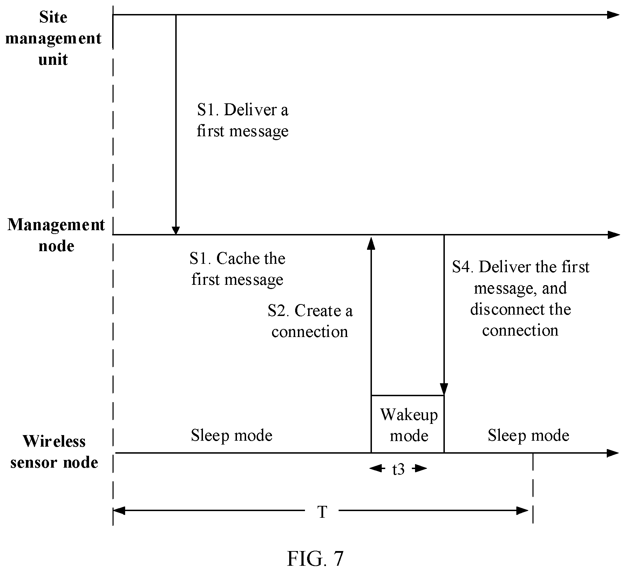

In an application scenario shown in FIG. 7, a wireless sensor management method provided in an embodiment of the present invention includes but is not limited to the following steps.

S1. A working cycle T of a wireless sensor includes duration of a wakeup mode and duration of a sleep mode. A site management unit needs to send program data (namely, a first message) to the wireless sensor when the wireless sensor is in the sleep mode, and therefore delivers the first message to a management node, and the management node caches the first message.

S2. After detecting that the sleep mode ends, a timer in the wireless sensor wakes the wireless sensor up and the wireless sensor enters the wakeup mode. The wireless sensor sends a connection request to the management node in the wakeup mode, to create a wireless connection between the wireless sensor and the management node.

S3. The management node delivers the first message to the wireless sensor, and then disconnects the communication connection to the wireless sensor. In this case, actual wakeup duration used by the wireless sensor is t3, and t3 is less than preset duration of the wakeup mode. In this case, the wireless sensor may not continue to wait for ending of the duration of the wakeup mode, but immediately terminates the wakeup mode and switches to the sleep mode early.

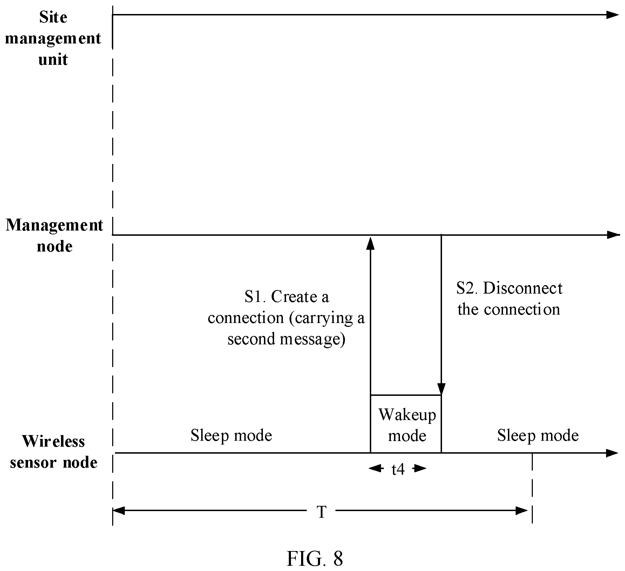

In an application scenario shown in FIG. 8, a wireless sensor management method provided in an embodiment of the present invention includes but is not limited to the following steps.

S1. A working cycle T of a wireless sensor includes duration of a wakeup mode and duration of a sleep mode. A site management unit does not deliver a first message to a management node when the wireless sensor is in the sleep mode. After detecting that the sleep mode ends, a timer in the wireless sensor wakes the wireless sensor up and the wireless sensor enters the wakeup mode. The wireless sensor sends a connection request to the management node in the wakeup mode, to create a wireless connection between the wireless sensor and the management node. In a possible embodiment, the wireless sensor sends a second message to the management node when sending the connection request, where the second message includes a newly-collected environmental parameter.

S2. The management node directly disconnects the communication connection to the wireless sensor, or the management node delivers a response to the wireless sensor, to indicate, to the wireless sensor, that the management node does not cache the first message, and then the wireless sensor disconnects the communication connection to the management node. In this case, actual wakeup duration used by the wireless sensor is t4, and t4 is less than preset duration of the wakeup mode. In this case, the wireless sensor may not continue to wait for ending of the duration of the wakeup mode, but immediately terminates the wakeup mode and switches to the sleep mode early.

It can be learned from the embodiments in FIG. 5 to FIG. 8 that in the embodiments of the present invention, the management node serves as a message agent between the wireless sensor and the site management unit. If the wireless sensor does not need to exchange information with the site management unit in a wakeup mode of a lifecycle, the wireless sensor can quickly enter a sleep mode in such time periods. When the wireless sensor node needs to exchange information with the site management unit, the wireless sensor node only needs to quickly exchange information with the management node instead of directly exchanging information with the site management unit, to greatly shorten a communication link and reduce communication costs, thereby shortening duration of the wakeup mode of the wireless sensor, reducing power consumption of the wireless sensor, and greatly prolonging a battery replacement cycle of the wireless sensor node. In practice, according to the technical solutions of the embodiments of the present invention, a service life of a battery of the wireless sensor is prolonged by 5 to 10 times, thereby greatly prolonging the battery replacement cycle of the wireless sensor, meeting a requirement that the battery replacement cycle is more than 5 years in an application scenario of the access side site, and facilitating practical application of the wireless sensor at the access side site.

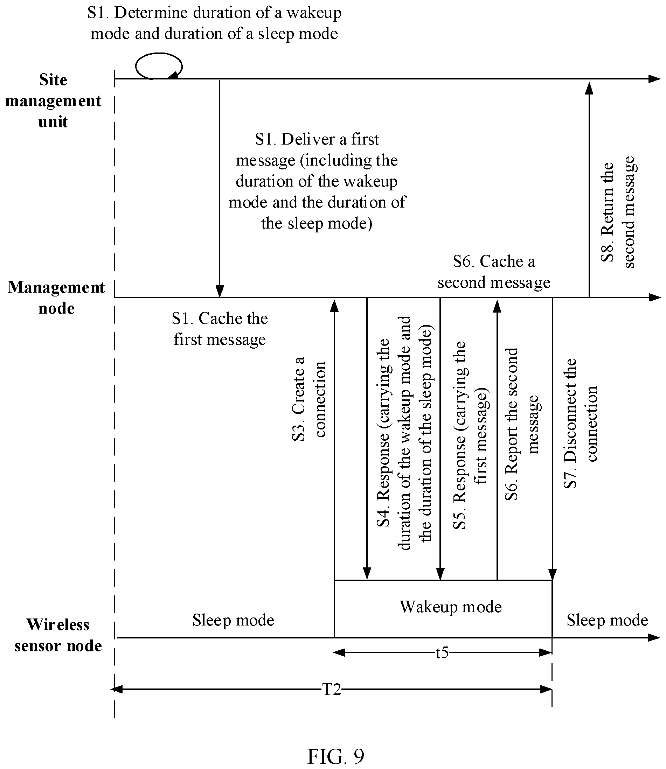

In an application scenario shown in FIG. 9, a wireless sensor management method provided in an embodiment of the present invention includes but is not limited to the following steps.

S1. A working cycle T2 of a wireless sensor includes duration of a wakeup mode and duration of a sleep mode. A site management unit needs to communicate with the wireless sensor within the duration of the sleep mode, and the site management unit determines new duration of the wakeup mode and new duration of the sleep mode of the wireless sensor based on a service requirement.

S2. The site management unit sends a first message to a management node, where the first message carries the new duration of the wakeup mode and the new duration of the sleep mode of the wireless sensor. Correspondingly, the management node caches the first message.

S3. After detecting that the sleep mode ends, a timer in the wireless sensor wakes the wireless sensor up and the wireless sensor enters the wakeup mode. The wireless sensor sends a connection request to the management node in the wakeup mode, to create a wireless connection between the wireless sensor and the management node.

S4. The management node delivers the new duration of the wakeup mode and the new duration of the sleep mode to the wireless sensor. Correspondingly, the wireless sensor stores the new duration of the wakeup mode and the new duration of the sleep mode, adjusts duration of a current wakeup mode to t5 based on the new duration of the wakeup mode and the new duration of the sleep mode, and adjusts duration of a sleep mode of a next working cycle and duration of a wakeup mode of the next working cycle.

S5. The management node delivers the first message to the wireless sensor (for example, the first message is a data query instruction). Correspondingly, the wireless sensor receives the first message, and completes corresponding service processing (for example, data query) for the first message. In a possible embodiment, the first message and the new duration of the wakeup mode and the new duration of the sleep mode in S5 may be delivered to the wireless sensor by using a same response.

S6. The wireless sensor uploads a second message to the management node, where the second message includes a service processing result (for example, a data query result) and/or an environmental parameter newly collected by the wireless sensor. Correspondingly, the management node caches the second message.

S7. The wireless sensor disconnects the communication connection to the management node, and enters the next new sleep mode after the new duration t5 of the wakeup mode ends.

S8. After the communication connection is disconnected, the management node uploads the second message to the site management unit.

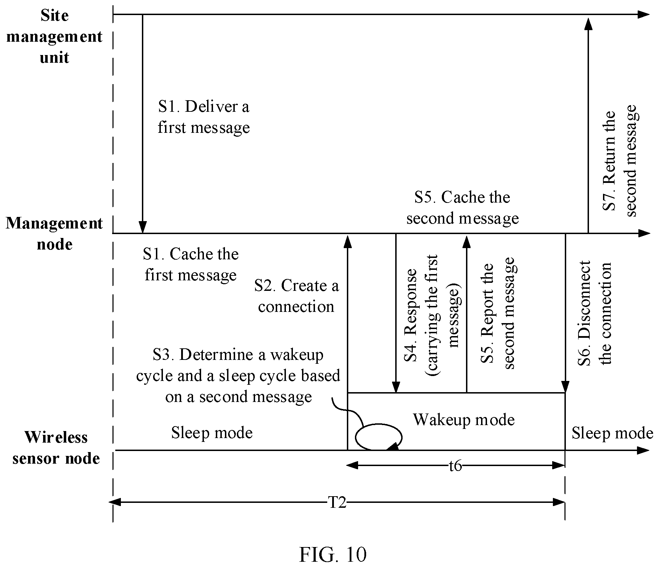

In an application scenario shown in FIG. 10, a wireless sensor management method provided in an embodiment of the present invention includes but is not limited to the following steps.

S1. A working cycle T2 of a wireless sensor includes duration of a wakeup mode and duration of a sleep mode. A site management unit needs to communicate with the wireless sensor when the wireless sensor is in the sleep mode, and therefore sends a first message to a management node, and the management node caches the first message.

S2. After detecting that the sleep mode ends, a timer in the wireless sensor wakes the wireless sensor up and the wireless sensor enters the wakeup mode. The wireless sensor sends a connection request to the management node in the wakeup mode, to create a wireless connection between the wireless sensor and the management node.

S3. The wireless sensor generates new duration of the wakeup mode and new duration of the sleep mode of the wireless sensor based on a service volume or service change frequency of the wireless sensor, adjusts duration of a current wakeup mode to t6 based on the new duration of the wakeup mode and the new duration of the sleep mode, and adjusts duration of a sleep mode of a next working cycle and duration of a wakeup mode of the next working cycle.

S4. The management node delivers the first message to the wireless sensor. Correspondingly, the wireless sensor receives the first message, and completes corresponding service processing for the first message.

S5. The wireless sensor uploads a second message to the management node, where the second message includes a service processing result and/or an environmental parameter newly collected by the wireless sensor. Correspondingly, the management node caches the second message.

S6. The wireless sensor disconnects the communication connection to the management node, and enters the next new sleep mode after the new duration t6 of the wakeup mode ends.

S7. After the communication connection is disconnected, the management node uploads the second message to the site management unit.

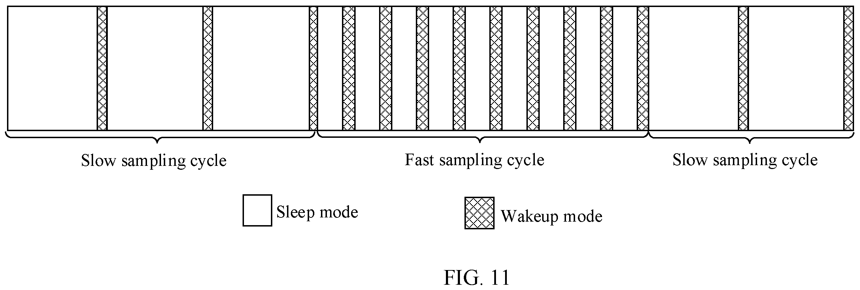

It can be learned from the embodiments in FIG. 9 and FIG. 10 that in the embodiments of the present invention, the duration of the sleep mode and the duration of the wakeup mode of the wireless sensor may be dynamically adjusted. In other words, the site management unit may generate the new duration of the sleep mode and the new duration of the wakeup mode based on a service requirement of the site management unit, or the wireless sensor may generate the new duration of the sleep mode and the new duration of the wakeup mode based on the service volume or the service change frequency of the wireless sensor. In specific implementation, data sampling frequency of the access side site may be adjusted based on an actual service status. Referring to FIG. 11, when a service volume is relatively small, a working cycle may be prolonged (for example, sampling is performed once per minute). In a process of prolonging the working cycle, the duration of the sleep mode of the wireless sensor is prolonged, the duration of the wakeup mode of the wireless sensor is shortened, and the access side site (the wireless sensor) is in a slow sampling cycle in this case. When a service volume is relatively large or a service greatly changes, the working cycle may be shortened (for example, sampling is performed 10 times per minute). In a process of shortening the working cycle, the duration of the sleep mode of the wireless sensor is shortened, the duration of the wakeup mode of the wireless sensor is prolonged, and the access side site is in a fast sampling cycle in this case. In this way, the wireless sensor can quickly respond to an external environment change, thereby ensuring optimal performance of the wireless sensor when power consumption is reduced and a service life of a battery of the wireless sensor is prolonged.

The foregoing describes the system and the method in the embodiments of the present invention. The following describes a related apparatus in the embodiments of the present invention.

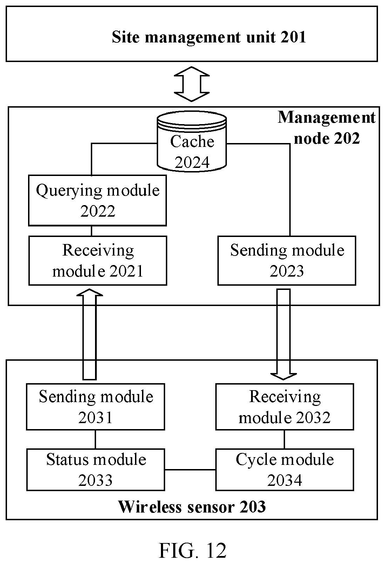

FIG. 12 shows an embodiment of a communications system including a site management unit 201, a management node 202, and a wireless sensor 203 according to an embodiment of the present invention. It should be noted that in specific implementation, the site management unit 201 and the management node 202 may be separately deployed, or the site management unit 201 and the management node 202 may be physically or functionally deployed together. As shown in FIG. 12, a wired or wireless communication connection may exist between the site management unit 201 and the management node 202 to implement data communication between the site management unit 201 and the management node 202, and a wireless communication connection exists between the management node 202 and the wireless sensor 203 to implement data communication between the management node 202 and the wireless sensor 203. Description is provided below.

As shown in FIG. 12, the management node 202 may include a receiving module 2021, a querying module 2022, a sending module 2023, and a cache 2024.

The cache 2024 may be configured to cache a first message delivered by the site management unit 201, where the first message is a message used for communication between the site management unit 201 and the wireless sensor 203. The cache 2024 may be further configured to cache a second message uploaded by the wireless sensor 203, where the second message is a message used for communication between the wireless sensor 203 and the site management unit 201.

The receiving module 2021 is configured to receive a connection request that is sent by the wireless sensor when the wireless sensor switches from a sleep mode to a wakeup mode.

The querying module 2022 is configured to query, based on the connection request, whether the management node 202 locally caches the first message in advance, where the first message is a message that is received by the receiving module from the site management unit when the wireless sensor is in the sleep mode.

The sending module 2023 is configured to send a response to the wireless sensor based on a result of the query, where the response is used to enable the wireless sensor to switch from the wakeup mode to the sleep mode. When the result of the query is that the management node 202 locally caches the first message in advance, the response carries the first message. When the result of the query is that the management node 202 does not locally cache the first message in advance, the response is further used to indicate that the management node does not cache the first message.

In a possible embodiment, after the sending module 2023 sends the response to the wireless sensor based on the result of the query, the receiving module 2021 is further configured to receive the second message sent by the wireless sensor, where the second message is a message used for communication between the wireless sensor and the site management unit.

In a possible embodiment, the site management unit 201 is configured to determine duration of the wakeup mode and duration of the sleep mode of the wireless sensor 203 based on a service requirement of the site management unit 201, where the first message includes the duration of the wakeup mode and the duration of the sleep mode.

That the response is used to instruct the wireless sensor to switch from the wakeup mode to the sleep mode includes: the response is used to instruct the wireless sensor to switch, when the wireless sensor meets the duration of the wakeup mode, from the wakeup mode to the sleep mode having the duration of the sleep mode.

In addition, as shown in FIG. 12, the wireless sensor 203 includes a sending module 2031, a receiving module 2032, and a status module 2033, and optionally includes a cycle module 2034.

The sending module 2031 is configured to send the connection request to the management node when the wireless sensor 203 is in the wakeup mode.

The receiving module 2032 is configured to receive the response sent by the management node, where the response is used to carry the first message that is cached in the management node in advance, or the response is used to indicate that the management node does not cache the first message, and the first message is a message that is received by the management node from the site management unit when the wireless sensor is in the sleep mode.

After the response is received, the status module 2033 enables the wireless sensor 203 to switch from the wakeup mode to the sleep mode.

In a possible embodiment, after the receiving module receives the response sent by the management node, the sending module 2031 is further configured to send the second message to the management node, where the second message is a message used for communication between the wireless sensor and the site management unit.

That the status module is configured to switch from the wakeup mode to the sleep mode based on the response includes: the status module is configured to switch from the wakeup mode to the sleep mode after the sending module sends the second message to the management node.

In a possible embodiment, the wireless sensor further includes the cycle module 2034, and the cycle module is configured to determine duration of the wakeup mode and duration of the sleep mode of the wireless sensor based on a service volume of the wireless sensor.

That the status module is configured to switch from the wakeup mode to the sleep mode based on the response includes: when the duration of the wakeup mode is met, the status module is configured to switch from the wakeup mode to the sleep mode having the duration of the sleep mode.

It should be noted that, for content not mentioned in the embodiment in FIG. 12 and specific implementation of each function module, refer to related descriptions of the embodiments in FIG. 4 to FIG. 10. Details are not described herein again.

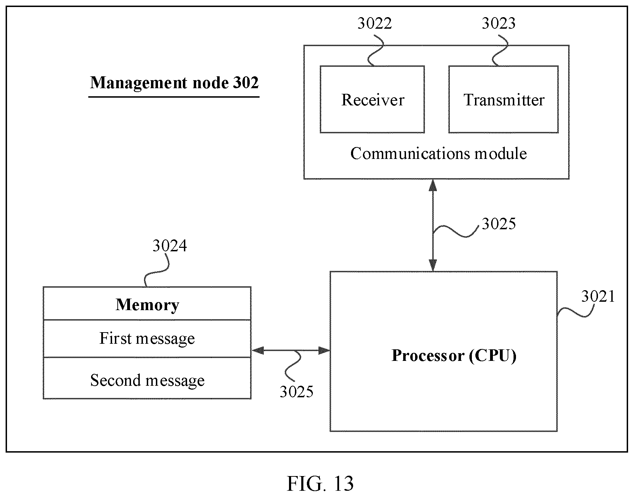

Based on a same invention concept, an embodiment of the present invention provides another management node 302. Referring to FIG. 13, the management node 302 includes a processor 3021, a communications module (including a receiver 3022 and a transmitter 3023), and a memory 3024 (one or more computer readable storage media). These components may communicate with each other on one or more communications buses 3025.

The processor 3021 may be one or more central processing units (Central Processing Unit, CPU). When the processor 3021 is one CPU, the CPU may be a single-core CPU or a multi-core CPU.

The communications module integrates the receiver 3022 with the transmitter 3023, and the receiver 3022 is configured to receive a signal from a site management unit (wiredly or wirelessly) and a radio signal from a wireless sensor. The transmitter 3023 is configured to send a signal to the site management unit (wiredly or wirelessly) and a radio signal to the wireless sensor. In specific implementation, the receiver 3022 is configured to receive a first message delivered by the site management unit, where the first message is a message used for communication between the site management unit and the wireless sensor; or the receiver 3022 is configured to receive a second message uploaded by the wireless sensor, where the second message is a message used for communication between the wireless sensor and the site management unit. In specific implementation, the transmitter 3023 is configured to send the first message to the wireless sensor, or the transmitter 3023 is configured to send the second message to the site management unit.

The memory 3024 is coupled with the processor 3021, and is configured to store program code, a communication instruction, and data. In specific implementation, the memory 3024 includes but is not limited to a random access memory (RAM), a read-only memory (ROM), an erasable programmable read only memory (EPROM), a compact disc read-only memory (CD-ROM), a cache , or the like. Specifically, the memory 3024 may be configured to cache the first message or the second message.

The processor 3021 may invoke the program code, the communication instruction, and the data in the memory 192, to implement a function of the management node in the embodiments in FIG. 4 to FIG. 10.

The receiver 3022 is configured to receive the first message that is sent by the site management unit when the wireless sensor is in a wakeup mode, where the first message is a message sent by the site management unit to the wireless sensor.

The memory 3024 is configured to cache the first message.

The receiver 3022 is further configured to receive a connection request that is sent by the wireless sensor when the wireless sensor is in the wakeup mode.

The processor is configured to query, based on the connection request, whether the management node 302 locally caches the first message in advance.

The transmitter 3023 is configured to send a response to the wireless sensor based on a result of the query, where the response is used to enable the wireless sensor to switch from the wakeup mode to the sleep mode. When the result of the query is that the management node 302 locally caches the first message in advance, the response carries the first message. When the result of the query is that the management node 302 does not locally cache the first message in advance, the response is further used to indicate that the management node does not cache the first message.

In a possible embodiment, after the transmitter 3023 sends the response to the wireless sensor based on the result of the query, the receiver 3022 is further configured to receive the second message sent by the wireless sensor, where the second message is a message used for communication between the wireless sensor and the site management unit.

In a possible embodiment, the first message includes duration of the wakeup mode and duration of the sleep mode.

That the response is used to enable the wireless sensor to switch from the wakeup mode to the sleep mode includes: the response is used to enable the wireless sensor to switch, when the wireless sensor meets the duration of the wakeup mode, from the wakeup mode to the sleep mode having the duration of the sleep mode.

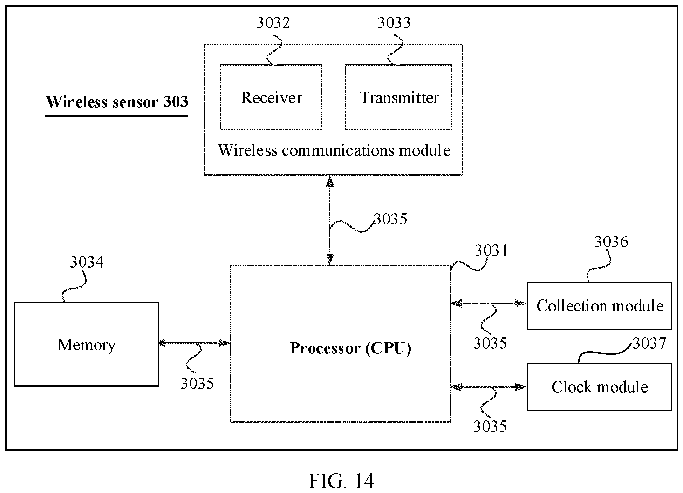

Based on a same invention concept, an embodiment of the present invention provides another wireless sensor 303. Referring to FIG. 14, the wireless sensor 303 includes a processor 3031, a wireless communications module (including a receiver 3032 and a transmitter 3033), a memory 3034 (one or more computer readable storage media), a collection module 3036, and a clock module 3037. These components may communicate with each other on one or more communications buses 3035.

The processor 3031 may be one or more central processing units (CPU). When the processor 3031 is one CPU, the CPU may be a single-core CPU or a multi-core CPU.

The wireless communications module integrates the receiver 3032 with the transmitter 3033, and the receiver 3022 is configured to receive a radio signal from a management node. The transmitter 3033 is configured to send a radio signal to the management node. In specific implementation, the receiver 3032 may be configured to receive a first message a no-message response delivered by the management node, where the first message is a message that is cached in the management node in advance when a site management unit needs to communicate with the wireless sensor. The transmitter 3033 is configured to send a second message to the management node, where the second message is a message used for communication between the wireless sensor and the site management unit.

The memory 3034 is coupled with the processor 3031, and is configured to store program code, a communication instruction, and data. In specific implementation, the memory 3024 includes but is not limited to a random access memory (RAM), a read-only memory (ROM), an erasable programmable read only memory (EPROM), a compact disc read-only memory (CD-ROM), a cache, or the like. Specifically, the memory 3034 may be configured to store the first message or the second message.

The processor 3031 is connected to the collection module 3036, and the collection module 3036 is configured to execute an actual service of the wireless sensor, for example, collect an environmental parameter.

The processor 3031 is further connected to the clock module 3037. The processor 3031 is in a "sleep-wakeup" working mode. The clock module 3037 is mainly configured to: generate a clock required for data transmission and timing control for the processor 3031, and control the wireless sensor 303 to enter a sleep mode or a wakeup mode, to implement a timer function. Specifically, the processor 3031 may dynamically adjust duration of the sleep mode and duration of the wakeup mode based on a service volume of the wireless sensor, and the clock module 3037 sleeps or wakes up based on the adjusted duration.

The processor 3031 may invoke the program code, the communication instruction, and the data in the memory 3034, to implement a function of the wireless sensor in the embodiments in FIG. 4 to FIG. 10.

In the foregoing embodiments, the description of each embodiment has respective focuses. For a part that is not described in detail in an embodiment, refer to related descriptions in other embodiments.

All or some of the foregoing embodiments may be implemented through software, hardware, firmware, or any combination thereof. When software is used to implement the embodiments, the embodiments may be implemented completely or partially in a form of a computer program product. The computer program product includes one or more computer instructions. When the computer program instruction is loaded and executed on a computer, all or a part of the procedures or functions are generated according to the embodiments of the present invention. The computer may be a general-purpose computer, a dedicated computer, a computer network, or other programmable apparatuses. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communications system, applied to an access side site, wherein the communications system comprises a site management unit, a management node, and a wireless sensor;
the wireless sensor is configured to send a connection request to the management node in a wakeup mode;
the management node is configured to query, based on the connection request, whether the management node locally caches a first message in advance, wherein the first message is a message that is received by the management node from the site management unit when the wireless sensor is in a sleep mode;
the management node is further configured to send a response to the wireless sensor based on a result of the query, wherein when the result of the query is that the management node locally caches the first message in advance, the response is used to carry the first message; and
the wireless sensor is further configured to switch from the wakeup mode to the sleep mode after receiving the response.

2. The system according to claim 1, wherein when the result of the query is that the management node does not locally cache the first message in advance, the response is used to indicate that the management node does not cache the first message.

3. The system according to claim 1 or 2, wherein after receiving the response, the wireless sensor is further configured to send a second message to the management node, wherein the second message is a message used for communication between the wireless sensor and the site management unit; and
that the wireless sensor is further configured to switch from the wakeup mode to the sleep mode based on the response comprises: the wireless sensor is further configured to switch from the wakeup mode to the sleep mode after sending the second message to the management node.

4. The system according to claim 1, wherein the site management unit is further configured to determine duration of the wakeup mode and duration of the sleep mode of the wireless sensor, wherein the first message comprises the duration of the wakeup mode and the duration of the sleep mode; and
that the wireless sensor is further configured to switch from the wakeup mode to the sleep mode based on the response comprises:
the wireless sensor is further configured to: when meeting the duration of the wakeup mode, switch from the wakeup mode to the sleep mode having the duration of the sleep mode.

5. The system according to claim 3, wherein the wireless sensor is further configured to determine duration of the wakeup mode and duration of the sleep mode of the wireless sensor based on a service volume of the wireless sensor; and
that the wireless sensor is further configured to switch from the wakeup mode to the sleep mode based on the response comprises:
the wireless sensor is configured to: when meeting the duration of the wakeup mode, switch from the wakeup mode to the sleep mode having the duration of the sleep mode.

6. A wireless sensor management method, wherein the method is applied to an access side site, the access side site comprises a site management unit, a management node, and a wireless sensor, and the method comprises:
receiving, by the management node, a connection request that is sent by the wireless sensor when the wireless sensor is in a wakeup mode;
querying, by the management node based on the connection request, whether the management node locally caches a first message in advance, wherein the first message is a message that is received by the management node from the site management unit when the wireless sensor is in a sleep mode; and
sending, by the management node, a response to the wireless sensor based on a result of the query, wherein the response is used to enable the wireless sensor to switch from the wakeup mode to the sleep mode, and when the result of the query is that the management node locally caches the first message in advance, the response carries the first message.

7. The method according to claim 6, wherein when the result of the query is that the management node does not locally cache the first message in advance, the response is further used to indicate that the management node does not cache the first message.

8. The method according to claim 6 or 7, after the sending, by the management node, a response to the wireless sensor based on a result of the query, comprising:
receiving a second message sent by the wireless sensor, wherein the second message is a message used for communication between the wireless sensor and the site management unit.

9. The method according to claim 6, wherein the method further comprises:
the first message comprises duration of the wakeup mode and duration of the sleep mode, and that the response is used to instruct the wireless sensor to switch from the wakeup mode to the sleep mode comprises:
the response is used to instruct the wireless sensor to switch, when the wireless sensor meets the duration of the wakeup mode, from the wakeup mode to the sleep mode having the duration of the sleep mode.

10. A wireless sensor management method, wherein the method is applied to an access side site, the access side site comprises a site management unit, a management node, and a wireless sensor, and the method comprises:
sending, by the wireless sensor, a connection request to the management node in a wakeup mode;
receiving, by the wireless sensor, a response sent by the management node, wherein the response is used to carry a first message that is cached in the management node in advance, or the response is used to indicate that the management node does not cache the first message, and the first message is a message that is received by the management node from the site management unit when the wireless sensor is in a sleep mode; and
switching, by the wireless sensor, from the wakeup mode to the sleep mode after receiving the response.

11. The method according to claim 10, wherein after receiving the response sent by the management node, the wireless sensor sends a second message to the management node, wherein the second message is a message used for communication between the wireless sensor and the site management unit; and
the switching, by the wireless sensor, from the wakeup mode to the sleep mode based on the response comprises: switching, by the wireless sensor, from the wakeup mode to the sleep mode after sending the second message to the management node.

12. The method according to claim 11, wherein the method further comprises:
determining, by the wireless sensor, duration of the wakeup mode and duration of the sleep mode of the wireless sensor based on a service volume of the wireless sensor; and
the switching, by the wireless sensor, from the wakeup mode to the sleep mode based on the response comprises:
when meeting the duration of the wakeup mode, switching, by the wireless sensor, from the wakeup mode to the sleep mode having the duration of the sleep mode.

13. A management node, comprising:
a receiver, configured to receive a first message that is sent by a site management unit when a wireless sensor is in a wakeup mode, wherein the first message is a message sent by the site management unit to the wireless sensor;
a memory, configured to cache the first message, wherein
the receiver is further configured to receive a connection request that is sent by the wireless sensor when the wireless sensor is in the wakeup mode;
a processor, configured to query, based on the connection request, whether the management node locally caches the first message in advance; and
a transmitter, configured to send a response to the wireless sensor based on a result of the query, wherein the response is used to enable the wireless sensor to switch from the wakeup mode to the sleep mode, and when the result of the query is that the management node locally caches the first message in advance, the response carries the first message.

14. The management node according to claim 13, wherein when the result of the query is that the management node does not locally cache the first message in advance, the response is further used to indicate that the management node does not cache the first message.

15. The management node according to claim 13 or 14, wherein after the transmitter sends the response to the wireless sensor based on the result of the query, the receiver is further configured to receive a second message sent by the wireless sensor, wherein the second message is a message used for communication between the wireless sensor and the site management unit.

16. The management node according to claim 13, wherein the first message comprises duration of the wakeup mode and duration of the sleep mode; and
that the response is used to enable the wireless sensor to switch from the wakeup mode to the sleep mode comprises:
the response is used to enable the wireless sensor to switch, when the wireless sensor meets the duration of the wakeup mode, from the wakeup mode to the sleep mode having the duration of the sleep mode.
